# EUROPEAN PATENT APPLICATION

(11) **EP 2 202 706 A2**
(43) Date of publication of application: **30.06.2010**
(21) Application number: 09171682.9
(22) Date of filing: 29.09.2009
(51) Int. Cl.: G08C 17/02, G08C 23/04

(54) **Universal remote control apparatus and universal remote control system for controlling plurality of electronic devices, and control methods thereof**

(30) Priority: 24.12.2008 KR 20080133900
(71) Applicant: SAMSUNG ELECTRONICS CO., LTD., Suwon-si Gyeonggi-do 442-742 (KR)
(72) Inventor: Park, Jong-wook, Seoul (KR); Bae, Myung-suk, Hwaseong-si (KR)
(74) Representative: Waddington, Richard

(57) **Abstract**

A universal remote control apparatus including a user input unit which receives an input of a user, a signal transmitting unit which transmits a control signal, a remote control signal receiving unit which receives a remote control signal from a device-specific remote control apparatus, a communication unit which performs communication with an information supply apparatus, and a controller which controls the communication unit to transmit the remote control signal for one of electronic devices to the information supply apparatus, and controls the signal transmitting unit to transmit the control signal corresponding to the input of the user based on code information on the device-specific remote control apparatus, which is received from the information supply apparatus.

## Description

### BACKGROUND OF INVENTION

### 1. Field of Invention

Apparatuses and methods consistent with the present invention relate to a universal remote control apparatus and a universal remote control system for controlling a plurality of electronic devices, and control methods thereof.

### 2. Description of Related Art

In general, electronic devices such as a VCR, DVD player, Blu-ray disc player, DIVX player, set top box, PC, or the like which can be connected to a display apparatus such as a TV may be manipulated by a universal remote control apparatus which can be used to control each of the electronic devices, as well as an individual or device-specific remote control apparatus.

Such a universal remote control apparatus needs configuring for each of the plurality of electronic devices which is to be manipulated. However, according to a related art universal remote control apparatus, a user must perform several steps to configure the universal remote control apparatus to control each electronic device, thereby causing inconvenience to the user. Further, the configuring the universal remote control to control the electronic device in the related art universal remote control apparatus is not easy for a user who is not familiar with the configuration process, thereby increasing inconvenience to the user.

### SUMMARY OF INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

Accordingly, it is an object of the present invention to provide a universal remote control apparatus and a universal remote control system which can provide easy configuration for a plurality of electronic devices, and control methods thereof.

According to the present invention there is provided an apparatus and method as set forth in the appended claims. Other features of the invention will be apparent from the dependent claims, and the description which follows.

The foregoing and/or other aspects of the present invention can be achieved by providing a universal remote control apparatus for a plurality of electronic devices, including: a user input unit which receives input of a user for the plurality of electronic devices; a signal transmitting unit which transmits a control signal for the plurality of electronic devices; a remote control signal receiving unit which receives a remote control signal from a device-specific remote control apparatus for the plurality of electronic devices; a communication unit which performs communication with an information supply apparatus which supplies code information on the device-specific remote control apparatus for the plurality of electronic devices; and a controller which controls the communication unit to transmit the remote control signal received from the device-specific remote control apparatus for one of the plurality of electronic devices to the information supply apparatus, and controls the signal transmitting unit to transmit the control signal corresponding to input of the user received for the one of the plurality of electronic devices based on the code information on the device-specific remote control apparatus for the one of the plurality of electronic devices, which is received from the information supply apparatus.

The controller may control the signal transmitting unit to transmit a second control signal corresponding to a predetermined operation of the one of the plurality of electronic devices based on the received code information.

The predetermined operation may include at least one of a turn-on operation and a turn-off operation of the one of the plurality of electronic devices.

The controller may control the signal transmitting unit to transmit a third control signal to control a display apparatus connected to the one of the plurality of electronic devices to perform an external input setting for the one of the plurality of electronic devices.

The controller may inform the user of initiation of the external input setting in the display apparatus.

The controller may inform the user of initiation of a remote control configuration for the one of the plurality of electronic devices.

The controller may request the user to perform a predetermined key input for the device-specific remote control apparatus to receive the remote control signal.

The controller may test a remote control configuration for the one of the plurality of electronic devices based on the received code information.

The controller may request the user to perform a predetermined key input for the universal remote control apparatus.

The foregoing and/or other aspects of the present invention can be also achieved by providing a method of controlling a plurality of electronic devices using a universal remote control apparatus, including: receiving a remote control signal from a device-specific remote control apparatus for one of the plurality of electronic devices by the universal remote control apparatus; transmitting the received remote control signal to an information supply apparatus by the universal remote control apparatus; receiving code information on the device-specific remote control apparatus for the one of the plurality of electronic devices from the information supply apparatus by the universal remote control apparatus; and transmitting a control signal corresponding to input of a user for the one of the plurality of electronic devices based on the received code information by the universal remote control apparatus.

The method may further include transmitting a second control signal corresponding to a predetermined operation of the one of the plurality of electronic devices based on the received code information by the universal remote control apparatus.

The predetermined operation may include at least one of a turn-on operation and a turn-off operation of the one of the plurality of electronic devices.

The method may further include transmitting a third control signal to control a display apparatus connected to the one of the plurality of electronic devices to perform an external input setting for the one of the plurality of electronic devices by the universal remote control apparatus.

The method may further include informing the user of initiation of the external input setting in the display apparatus by the universal remote control apparatus.

The method may further include informing the user of initiation of a remote control configuration for the one of the plurality of electronic devices by the universal remote control apparatus.

The method may further include requesting the user to perform a predetermined key input for the device-specific remote control apparatus to receive the remote control signal by the universal remote control apparatus.

The method may further include testing a remote control configuration for the one of the plurality of electronic devices based on the received code information by the universal remote control apparatus.

The method may further include requesting the user to perform a predetermined key input for the universal remote control apparatus by the universal remote control apparatus.

The foregoing and/or other aspects of the present invention can be also achieved by providing a universal remote control system, including: a display apparatus which transmits a remote control signal received from a device-specific remote control apparatus for one of a plurality of electronic devices and transmits code information on the private remote control apparatus for the one of the plurality of electronic devices; and a universal remote control apparatus which transmits a control signal corresponding to input of a user for the one of the plurality of electronic devices based on the code information on the device-specific remote control apparatus for the one of the plurality of electronic devices transmitted from the display apparatus.

The universal remote control apparatus may transmit a second control signal corresponding to a predetermined operation of the one of the plurality of electronic devices based on the received code information, and the display apparatus performs an external input setting for the one of the plurality of electronic devices according to the one of the plurality of electronic devices that performs the predetermined operation.

The foregoing and/or other aspects of the present invention can be also achieved by providing a method of controlling a plurality of electronic devices using a universal remote control apparatus and a display apparatus, including: receiving a remote control signal from a device-specific remote control apparatus for one of the plurality of electronic devices by the display apparatus; transmitting the received remote control signal to an information supply apparatus by the display apparatus; receiving code information on the device-specific remote control apparatus for the one of the plurality of electronic devices from the information supply apparatus by the display apparatus; transmitting the received code information to the universal remote control apparatus by the display apparatus; and transmitting a control signal corresponding to input of a user for the one of the plurality of electronics device based on the code information transmitted from the display apparatus by the universal remote control apparatus.

The method may further include: transmitting a second control signal corresponding to a predetermined operation of the one of the plurality of electronic devices based on the received code information by the universal remote control apparatus; and performing an external input setting for the one of the plurality of electronic devices according to whether the one of the plurality of electronic devices performs the predetermined operation by the display apparatus.

Additional aspects of the present invention will be set forth in part in the description which follows and, in part, will be obvious from the description, or may be learned by practice of the present invention.

### BRIEF DESCRIPTION OF DRAWINGS

The above and/or other aspects of the present invention will become apparent and more readily appreciated from the following description of the exemplary embodiments, taken in conjunction with the accompanying drawings, in which:

FIG. 1 illustrates a universal remote control apparatus according to an exemplary embodiment of the present invention;

FIG. 2 illustrates components of the universal remote control apparatus in FIG. 1;

FIG. 3 is a flowchart illustrating operation of the universal remote control apparatus in FIG. 1;

FIG. 4 illustrates a universal remote control system according to an exemplary embodiment of the present invention;

FIG. 5 illustrates components of the universal remote control system in FIG. 4; and

FIG. 6 is a flowchart illustrating operation of the universal remote control system in FIG. 4.

### DETAILED DESCRIPTION OF EXEMPLARY EMBODIMENTS OF THE INVENTION

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures. Redundant description to different embodiments may be omitted as necessary.

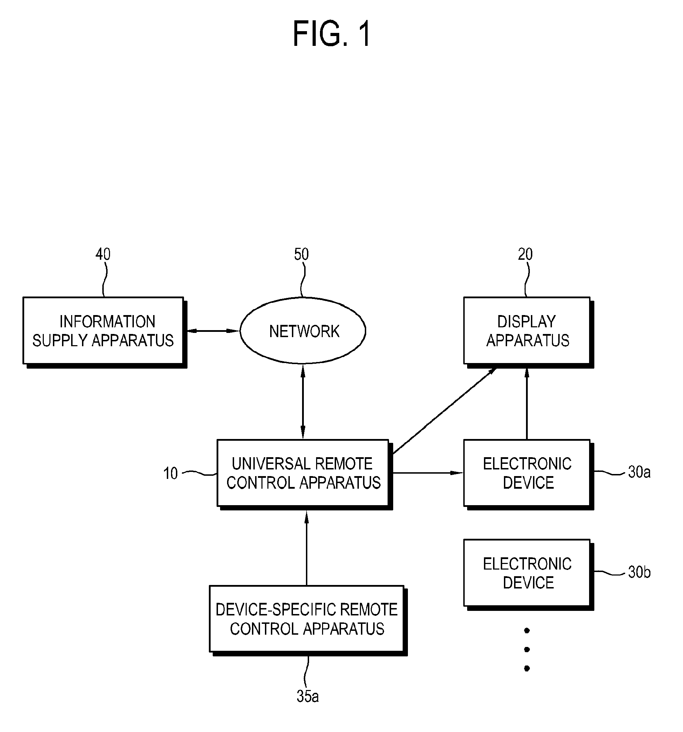

FIG. 1 illustrates a universal remote control apparatus 10 according to an exemplary embodiment of the present invention.

The universal remote control apparatus 10 may be commonly used for a plurality of electronic devices 30a and 30b. FIG. 1 shows two electronic devices 30a and 30b, however, more than two electronic devices may be provided. The electronic devices 30a and 30b include a variety of devices, such as a VCR, DVD player, Blu-ray disc player, DIVX player, set top box, PC or the like, which may be manipulated with a remote control signal. The universal remote control apparatus 10 may receive a remote control signal of a device-specific remote control apparatus 35a for each of the electronic devices 30a and 30b, and performs communication with an information supply apparatus 40 through a network 50. The information supply apparatus 40 supplies code information about the device-specific remote control apparatus 35a for each of the electronic devices 30a and 30b.

In order to manipulate one electronic device 30a among the electronic devices 30a and 30b in an exemplary embodiment, the universal remote control apparatus 10 automatically performs a configuration process for the electronic device 30a with simple input of a user. More specifically, the universal remote control apparatus 10 receives a specific remote control signal from the device-specific remote control apparatus 35a for the electronic device 30a and transmits the received remote control signal to the information supply apparatus 40 through the network 50. The universal remote control apparatus 10 receives corresponding code information from the information supply apparatus 40 and controls the electronic device 30a based on the received code information according to input of the user.

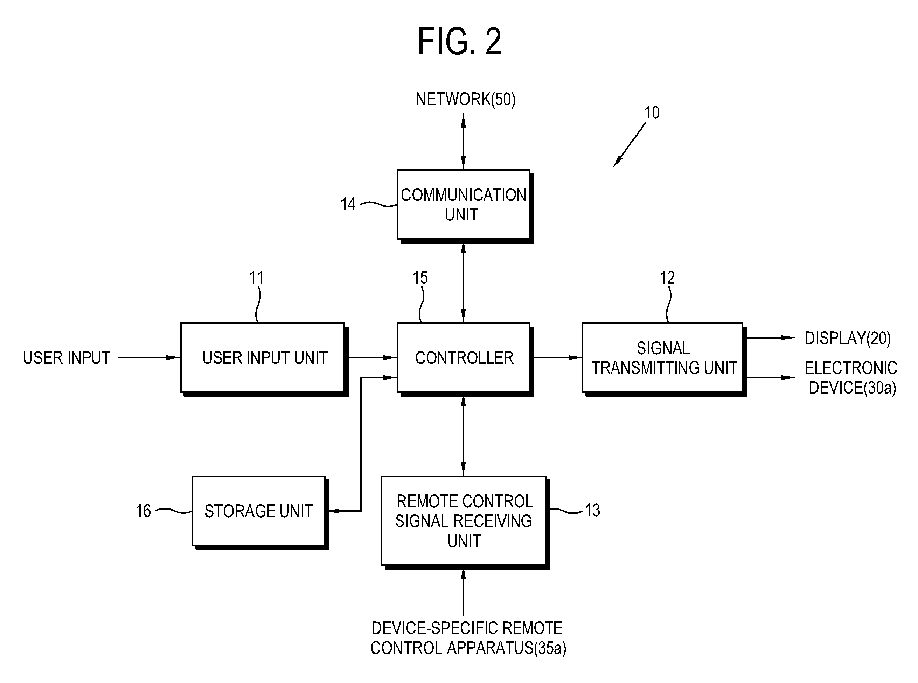

FIG. 2 illustrates various units of the universal remote control apparatus 10 according to an exemplary embodiment of the present invention.

As shown in FIG. 2, the universal remote control apparatus 10 includes a user input unit 11, a signal transmitting unit 12, a remote control signal receiving unit 13, a communication unit 14, and a controller 15.

The user input unit 11, through which input of a user for the plurality of electronic devices 30a and 30b is received, includes at least one input key (not shown), for example, of a button type. The user input unit 11 transmits information on the input of the user inputted through the input key to the controller 15.

The signal transmitting unit 12 outputs a control signal for any one of the electronic devices 30a and 30b under the control of the controller 15. The outputted control signal includes an IR (Infrared) signal and an RF (Radio Frequency) signal.

The remote control signal receiving unit 13 receives a remote control signal from a device-specific remote control apparatus 35a for any one of the electronic devices 30a and 30b. The received remote control signal includes an IR signal and an RF signal. The communication unit 14 performs communication with the information supply apparatus 40 through the network 50 under the control of the controller 15. The communication includes wired or wireless network communication.

The controller 15 controls the signal transmitting unit 12, the remote control receiving unit 13, and the communication unit 14. The controller 15 controls the communication unit 14 to transmit the remote control signal from the device-specific remote control apparatus 35a received through the remote control signal receiving unit 13 to the information supply apparatus 40.

In order to receive the remote control signal from the device-specific remote control apparatus 35a to initiate a configuration process for the device-specific remote control apparatus 35a (hereinafter, "remote control configuration"), the controller 15 requests a user to perform a specific key input for the device-specific remote control apparatus 35a. In this respect, the universal remote control apparatus 10 may further include an output unit (not shown), such as a display, a speaker, etc. for outputting the request message. The output unit may be provided inside the universal remote control apparatus 10 or may be provided in an external device such as a TV for communicating with the universal remote control apparatus 10.

According to another exemplary embodiment of the present invention, in the case that the remote control signal is received from the device-specific remote control apparatus 35a, the controller 15 may inquire a user whether to initiate remote control configuration through the output unit, and may initiate remote control configuration according to user selection.

Alternatively, at least one of the remote control signal receiving unit 13 and the signal transmitting unit 12 may be provided in a separate device (not shown), which is different from the universal remote control apparatus 10. In this case, the separate device (not shown) may further include a communication means (not shown) which performs communication with the separate device to receive a remote control signal received through the remote control signal receiving unit 13 or to transmit a control signal to be transmitted by the signal transmitting unit 12. The communication means in this embodiment may be provided in the communication unit 14 or may be separately provided.

The information supply apparatus 40 analyzes the remote control signal received from the universal remote control apparatus 10 and identifies the corresponding device-specific remote control apparatus 35a and then transmits code information on the corresponding device-specific remote control apparatus 35a to the universal remote control apparatus 10. The information supply apparatus 40 may be embodied as a server on the Internet or a server on a home network, and may be provided in the universal remote control apparatus 10 or another remote control apparatus (not shown).

For the analysis, the information supply apparatus 40 compares a waveform of the received remote control signal and waveforms of a plurality of reference remote control signals which are provided as a database to select one waveform having an overlapping degree larger than or equal to a predetermined value. According to an alternative exemplary embodiment, in the case that the overlapping degree of the waveform of the remote control signal is under the predetermined value, the information supply apparatus 40 may inform the universal remote control apparatus 10 of the fact. In this case, the controller 15 may request the user to press another input key for the device-specific remote control apparatus 35a through the output unit, and may transmit the remote control signal of the received device-specific remote control apparatus 35a to the information supply apparatus 40. Alternatively, the controller 15 may request the user to press a predetermined input key of the device-specific remote control apparatus 35a through the output unit. In this case, the universal remote control apparatus 10 may initially receive information about the predetermined input key from the information supply apparatus 40.

The code information received from the information supply apparatus 40 includes at least one of a manufacturer, type, model information, and code number for the device-specific remote control apparatus 35a. The universal remote control apparatus 10 may receive code information about two or more device-specific remote control apparatuses 35a. In this case, the controller 15 may inform a user of the code information about the two or more device-specific remote control apparatuses 35a through the output unit and may request the user to select code information about one of the two or more device-specific remote control apparatuses 35a.

According to another exemplary embodiment, the controller 15 may test the remote control configuration to confirm whether the received code information corresponds to the electronic device 30a to be manipulated by the user. For example, the controller 15 may request the user to press a specific key of the user input unit 11, and thus, may perform remote control configuration according to user confirmation of whether the electronic device 30a to be manipulated performs a desired operation. Alternatively, the controller 15 may output a control signal so that the electronic device 30a performs a predetermined operation and may inquire the user about the result.

The universal remote control apparatus 10 may further include a storage unit 16 which stores the received code information.

The controller 15 controls the signal transmitting unit 12 to output a control signal corresponding to input of the user inputted through the user input unit 11 based on the received code information.

As described above, according to exemplary embodiments of the present invention, remote control configuration of the universal remote control apparatus 10 for the electronic device 30a to be manipulated can be automatically performed when the user presses a specific key for the device-specific remote control apparatus 35a, thereby enhancing user convenience. Further, the user does not need to know a specific configuration procedure, and thus, user convenience is enhanced.

Further, code information is provided through the outside information supply apparatus 40 having no limitation in storage capacity, and thus, the present invention may be applicable for the plurality of electronic devices 30a and 30b. Furthermore, the outside information supply apparatus 40 analyzes a remote control signal and determines code information, thereby obviating the need for a separate device for analyzing and determining within the universal remote control apparatus 10 and thus reducing the cost of the universal remote control apparatus 10.

Turning to FIGS. 1 and 2, according to another exemplary embodiment, the electronic devices 30a and 30b may include image devices which transmit an image to the display apparatus 20, such as a TV. The display apparatus 20 includes a plurality of ports (not shown) to which the plurality of electronic devices 30a and 30b are to be respectively connected. In an exemplary embodiment, it is assumed that the display apparatus 20 and the electronic device 30a of the plurality of electronic devices 30a and 30b are connected to each other through one of the plurality of ports.

The controller 15 in the universal remote control apparatus 10 controls the signal transmitting unit 12 to output a control signal for performing a predetermined operation by the electronic device 30a based on the received code information. The predetermined operation for the electronic device 30a may include a turn-on operation and/or a turn-off operation. The display apparatus 20 monitors whether an image signal for the plurality of ports exists and confirms a port to which a turned-on and/or turned-off device is connected. The display apparatus 20 may perform external input setting for the electronic device 30a in which the image signal exists based on the result.

As described above, according to an exemplary embodiment, a user does not need to manipulate an external input setting of the display apparatus 20 for the electronic device 30a connected to the display apparatus 20, thereby enhancing user convenience.

Alternatively, the display apparatus 20 may display information about the confirmed electronic device 30a and/or information about the remote control configuration, or transmit the information to the universal remote control apparatus 10. The controller 15 in the universal remote control apparatus 10 may inform the user of the information transmitted from the display apparatus 20 through the output unit.

According to another exemplary embodiment, the controller 15 in the universal remote control apparatus 10 may previously inform the display apparatus 20 of a process of remote control configuration so that the display apparatus 20 can prepare monitoring for the plurality of ports. In this case, the controller 15 may inform the display apparatus 20 of the remote control configuration through the signal transmitting unit 12. Alternatively, the controller 15 may inform the display apparatus 20 of the remote control configuration through the communication unit 14.

The controller 15 may include a nonvolatile memory (not shown) such as a ROM in which a control program for performing the above operation is stored, a volatile memory (not shown) such as a RAM in which at least a part of the control program stored in the nonvolatile memory is loaded, and a microprocessor (not shown) such as a CPU which performs the control program loaded in the volatile memory.

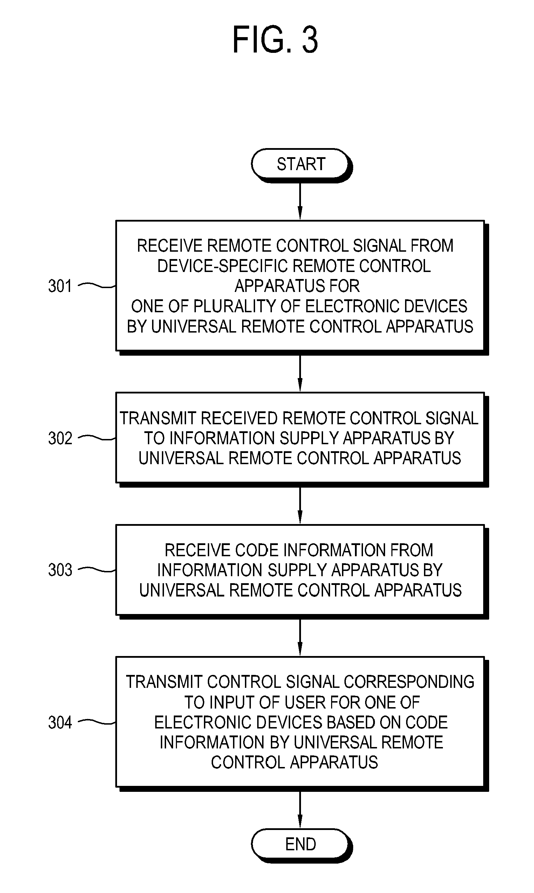

FIG. 3 is a flowchart illustrating an operational process of the universal remote control apparatus 10 according to an exemplary embodiment of the present invention.

Firstly, the universal remote control apparatus 10 receives a remote control signal from the device-specific remote control apparatus 35a corresponding to one electronic device 30a among the plurality of electronic devices 30a and 30b (301).

Then, the universal remote control apparatus 10 transmits the remote control signal received from the device-specific remote control apparatus 35a to the information supply apparatus 40 (302).

The universal remote control apparatus 10 receives code information on the device-specific remote control apparatus 35a from the information supply apparatus 40 (303).

Then, the universal remote control apparatus 10 transmits a control signal corresponding to input of a user for the electronic device 30a based on the received code information and controls the electronic device 30a (304).

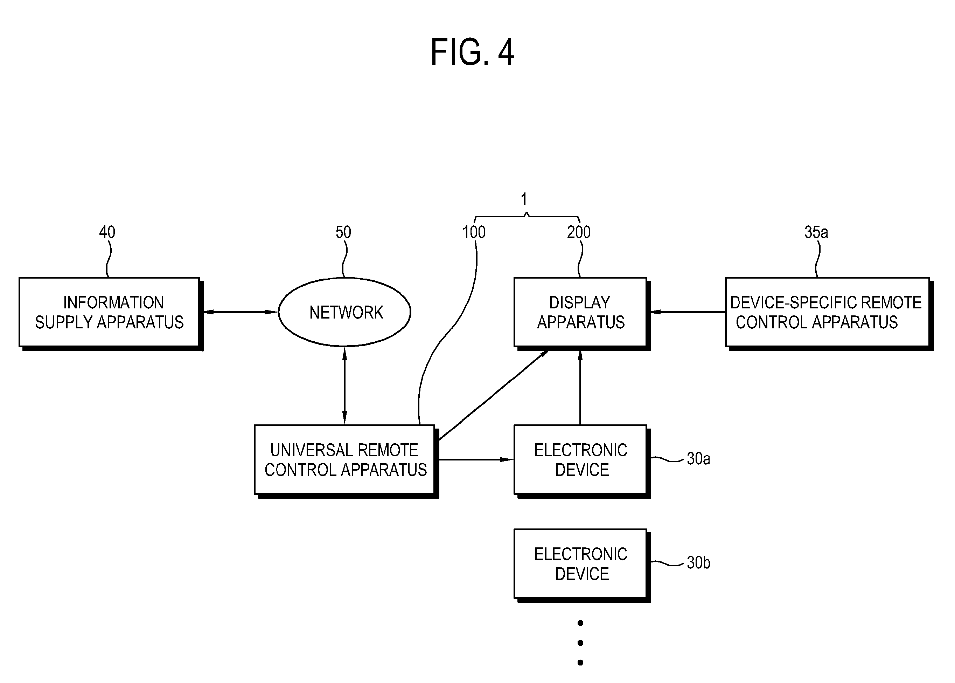

A universal remote control system 1 according to an exemplary embodiment of the present invention will be described referring to FIGS. 4 to 6.

Redundant description of a configuration of the universal remote control system 1 in FIGS. 4 to 6, which is similar to or the same as that of the universal remote control apparatus 10 in FIGS. 1 to 3, may be omitted.

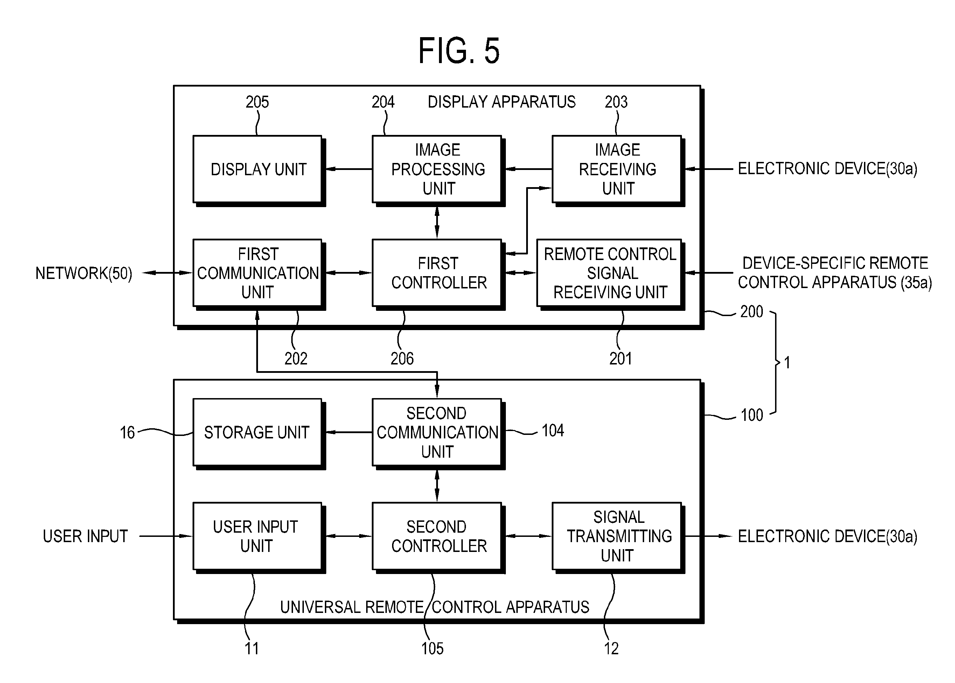

FIG. 4 illustrates the universal remote control system 1 according to an exemplary embodiment. The universal remote control system 1 includes a universal remote control apparatus 100 and a display apparatus 200. FIG. 5 illustrates components of the universal remote control apparatus 100 and the display apparatus 200 according to an exemplary embodiment of the present invention.

The display apparatus 200 may include a remote control signal receiving unit 201, a first communication unit 202, an image receiving unit 203, an image processing unit 204, a display unit 205, and a first controller 206.

The remote control signal receiving unit 201 receives a remote control signal from a device-specific remote control apparatus 35a for a plurality of electronic devices 30a and 30b. The first communication unit 202 performs communication with an information supply apparatus 40 through a network 50. Further, the first communication unit 202 performs communication with the universal remote control apparatus 100. The image receiving unit 203 receives an image from at least one of the plurality of electronic devices 30a and 30b. The image processing unit 204 processes the image received by the image receiving unit 203. The display unit 205 displays the image processed by the image processing unit 204. The first controller 206 controls the display apparatus 200.

The universal remote control apparatus 100 may include a user input unit 11, a signal transmitting unit 12, a second communication unit 104, and a second controller 105.

The second communication unit 104 performs communication with the display apparatus 200. The second controller 105 controls the universal remote control apparatus 100. The universal remote control apparatus 100 may further include a storage unit 16 which stores code information.

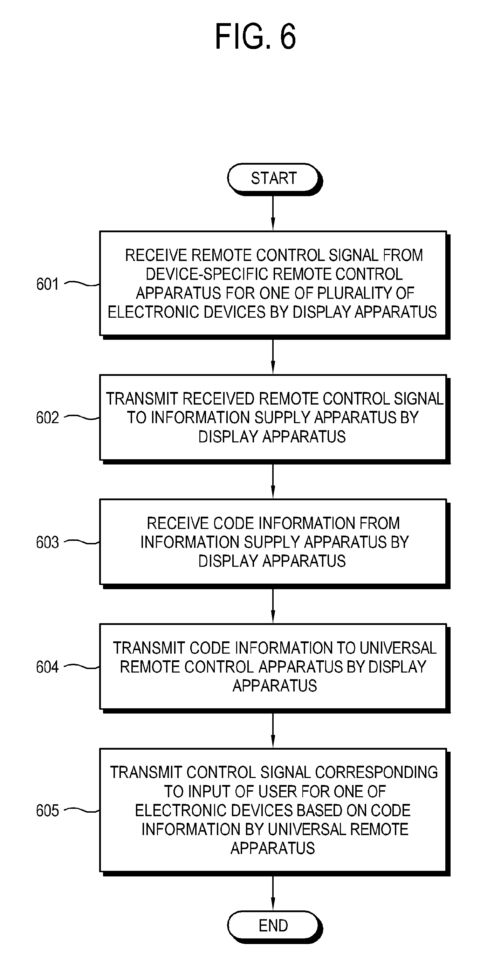

FIG. 6 is a flowchart illustrating an operation of the universal remote control system 1 according to an exemplary embodiment.

The remote control signal receiving unit 201 in the display apparatus 200 receives a remote control signal from a device-specific remote control apparatus 35a for one electronic device 30a of the plurality of electronic devices 30a and 30b (601).

The first controller 206 in the display apparatus 200 controls the first communication unit 202 to transmit the received remote control signal to the information supply apparatus 40 (602).

The first controller 206 in the display apparatus 200 receives code information on the device-specific remote control apparatus 35a from the information supply apparatus 40 through the first communication unit 202 (603).

The first controller 206 in the display apparatus 200 transmits the received code information to the universal remote control apparatus 100 through the first communication unit 202 (604).

The second controller 105 in the universal remote control apparatus 100 controls the signal transmitting unit 12 to output a control signal corresponding to input of a user inputted through the user input unit 11 based on the code information received from the display apparatus 200 (605).

Although a few exemplary embodiments of the present invention have been shown and described, it will be appreciated by those skilled in the art that changes may be made in these embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A universal remote control apparatus for a plurality of electronic devices, comprising:
a user input unit which receives input of a user for the plurality of electronic devices;
a signal transmitting unit which transmits a control signal for the plurality of electronic devices;
a remote control signal receiving unit which receives a remote control signal from a device-specific remote control apparatus for the plurality of electronic devices;
a communication unit which performs communication with an information supply apparatus which supplies code information on the device-specific remote control apparatus for the plurality of electronic devices; and
a controller which controls the communication unit to transmit the remote control signal received from the device-specific remote control apparatus for the plurality of electronic devices to the information supply apparatus, and controls the signal transmitting unit to transmit the control signal corresponding to input of the user received for one of the plurality of electronic devices based on the code information on the device-specific remote control apparatus for the one of the plurality of electronic devices, which is received from the information supply apparatus.

2. The universal remote control apparatus according to claim 1, wherein the controller controls the signal transmitting unit to transmit a second control signal corresponding to a predetermined operation of the one of the plurality of electronic devices based on the received code information.

3. The universal remote control apparatus according to claim 2, wherein the predetermined operation comprises at least one of a turn-on operation and a turn-off operation of the one of the plurality of electronic devices.

4. The universal remote control apparatus according to claim 2, wherein the controller controls the signal transmitting unit to transmit a third control signal to control a display apparatus connected to the one of the plurality of electronic devices to perform an external input setting for the one of the plurality of electronic devices.

5. The universal remote control apparatus according to claim 4, wherein the controller informs the user of initiation of the external input setting in the display apparatus.

6. The universal remote control apparatus according to any preceding claim, wherein the controller informs the user of initiation of a remote control configuration for the one of the plurality of electronic devices.

7. The universal remote control apparatus according to any preceding claim, wherein the controller requests the user to perform a predetermined key input for the device-specific remote control apparatus to receive the remote control signal.

8. The universal remote control apparatus according to any preceding claim, wherein the controller tests a remote control configuration for the one of the plurality of electronic devices based on the received code information.

9. A method of controlling a plurality of electronic devices using a universal remote control apparatus, comprising:
receiving a remote control signal from a device-specific remote control apparatus for one of the plurality of electronic devices;
transmitting the received remote control signal to an information supply apparatus;
receiving code information on the device-specific remote control apparatus for the one of the plurality of electronic devices from the information supply apparatus; and
transmitting a control signal corresponding to input of a user inputted for the one of the plurality of electronic devices based on the received code information.

10. The method according to claim 9, further comprising transmitting a second control signal corresponding to a predetermined operation of the one of the plurality of electronic devices based on the received code information .

11. The method according to claim 10, wherein the predetermined operation comprises at least one of a turn-on operation and a turn-off operation of the one of the plurality of electronic devices.

12. The method according to claim 10 or claim 11, further comprising transmitting a third control signal to control a display apparatus connected to the one of the plurality of electronic devices to perform an external input setting for the one of the plurality of electronic devices .

13. The method according to any one of claims 9 to 12, further comprising informing the user of initiation of a remote control configuration for the one of the plurality of electronic devices .

14. The method according to any one of claims 9 to 13, further comprising requesting the user to perform a predetermined key input for the device-specific remote control apparatus to receive the remote control signal.

15. The method according to any one of claims 9 to 14, further comprising testing a remote control configuration for the one of the plurality of electronic devices based on the received code information .
